# FASCICULE DE BREVET EUROPEEN

(11) **EP 3 580 050 B1**
(45) Date de publication et mention de la délivrance du brevet: **19.07.2023**
(21) Numéro de dépôt: 18708164.1
(22) Date de dépôt: 09.02.2018
(51) Int. Cl.: B29C 70/54, B29C 70/48, B29C 35/02

(54) **CIRCUIT D'INJECTION DE RESINE ET PROCEDES ASSOCIES**
HARZEINSPRITZKREIS UND ZUGEHÖRIGE VERFAHREN
RESIN INJECTION CIRCUIT AND ASSOCIATED METHODS

(30) Priorité: 09.02.2017 US 201762457106 P
(43) Date de publication de la demande: 18.12.2019
(73) Titulaire: SAFRAN AIRCRAFT ENGINES, 75015 Paris (FR); Safran, 75015 Paris (FR)
(72) Inventeur: TECHER, Marc-Emmanuel, Jean François, 77550 Moissy-Crayamel (FR); ASHTARI, Nicolas, Cambyse, 77550 Moissy-Crayamel (FR); JAUSSAUD, Raoul, 77550 Moissy-Crayamel (FR); BAZIN, Benoit, 77550 Moissy-Crayamel (FR); CHAUVIN, Thierry, 77550 Moissy-Crayamel (FR); FOUSSARD, Olivier, 77550 Moissy-Crayamel (FR); GRAVELLE, NATE, 77550 Moissy-Crayamel (FR); TOUZE, Adrien, 77550 Moissy-Crayamel (FR)
(74) Mandataire: Gevers & Orès
(86) Numéro de dépôt international: PCT/FR2018/050317
(87) Numéro de publication internationale: WO 2018/146428

(56) Documents cités:
- EP-A1- 1 384 566
- WO-A1-97/48546
- FR-A1- 2 975 629
- US-A- 4 120 922
- US-A- 5 516 271

## Description

L'invention se rapporte à un circuit d'injection de résine utilisé pour le moulage d'une pièce composite comportant un régulateur d'injection de résine, un procédé de commande d'un tel circuit, et un procédé de fabrication mettant en oeuvre un tel procédé.

### ETAT DE LA TECHNIQUE ANTERIEURE

Le procédé de moulage RTM, dont les initiales font référence à l'acronyme anglo-saxon de *Resin Transfer Molding,* est un procédé bien connu de réalisation de pièces en matériaux composites à base de fibres imprégnées de résine, ces matériaux présentant des caractéristiques de résistance élevée ainsi qu'une masse réduite.

De manière connue, un tel procédé, lorsqu'il est appliqué à une pièce de turbomachine telle qu'une aube de soufflante, comporte plusieurs opérations successives. On commence par réaliser le tissage de fibres pour obtenir une ébauche de préforme en trois dimensions, puis on découpe ladite ébauche pour obtenir une préforme présentant sensiblement la forme de l'aube à obtenir. Cette préforme est alors disposée dans un moule d'injection, qui est refermé. Puis on injecte de la résine à l'état liquide en maintenant une pression sur la résine injectée pendant que l'on effectue la polymérisation de la pièce par chauffage.

Les résines utilisées sont des résines très fluides qui sont à même de bien pénétrer les fibres de la préforme, même lorsqu'elles sont injectées sous une pression réduite. Pendant la polymérisation, sous l'effet de la chaleur, la résine injectée passe successivement de l'état liquide à l'état gélifié et enfin à l'état solide.

Le maintien de la pression sur la résine est une exigence primordiale qui a pour but de garantir des pièces de qualité, sans défaut et sans porosité. En effet, la résine tendant à dégazer pendant la polymérisation, il est nécessaire de maintenir la pression de la résine jusqu'à la polymérisation complète de la pièce afin d'éviter que des relâchements de gaz ne viennent compromettre l'intégrité de la résine.

Dans les systèmes d'injection RTM conventionnels il est connu de maintenir la pression dans le circuit d'injection par l'intermédiaire d'un cylindre injecteur qui est relié au circuit, qui contient la résine, et qui en assure la distribution et la mise sous pression. Une fois la résine injectée, il est alors nécessaire de maintenir le cylindre injecteur connecté au circuit d'injection afin de maintenir la pression dans le moule jusqu'à polymérisation complète de la résine.

De tels systèmes présentent l'inconvénient de ne pas permettre d'atteindre des cadences de production élevées, puisque le temps d'immobilisation du cylindre injecteur dans le circuit d'injection, pour lequel il ne peut pas être utilisé sur un autre circuit d'injection, dépend naturellement du temps de la polymérisation de la résine.

De plus, dans un système de ce type, il existe un risque non négligeable de polymérisation de la résine à l'intérieur du circuit d'injection ce qui rend complexe les opérations de nettoyage dudit circuit. En particulier, si le circuit n'est pas chauffé, la résine contenue dans le circuit d'injection entre le moule et le cylindre injecteur peut être amenée à polymériser avant la résine contenue dans le moule, car l'épaisseur de résine dans le moule est plus importante. Ce figeage de la résine dans le circuit d'injection, outre qu'il complique son nettoyage, ne permet pas non plus d'assurer la transmission de la pression exercée par le cylindre injecteur jusque dans le moule, ce qui se traduit par la présence de défauts dans la pièce.

Pour remédier à ces inconvénients, on a proposé dans le document WO-2013/068666, un dispositif de maintien en pression pour un circuit d'injection de résine dans un moule de fabrication, comportant d'une part des vannes d'isolation permettant d'isoler un cylindre injecteur en amont du moule et un piège à résine agencé en aval du moule, et d'autre part des moyens de mise sous pression qui sont aptes à injecter un gaz sous pression dans des canalisations du circuit d'injection situées entre ces vannes et le moule en aval et en sortie du moule. A cet effet, des conduites en T, interposées dans le circuit d'injection entre les vannes d'isolation et le moule, sont reliées à une source de gaz sous pression et le circuit comporte des conduites verticales sensées empêcher le gaz de parvenir jusqu'au moule. Le cylindre injecteur peut être alors déconnecté du circuit tandis que la pression est maintenue sur la résine grâce aux moyens de mise sous pression.

Cette conception présente l'inconvénient que, compte tenu de la fluidité de la résine, du gaz sous pression puisse néanmoins cheminer dans le circuit et être injecté dans le moule sous forme de bulles, et par conséquent provoquer l'apparition de défauts à la surface de la pièce. Il est donc nécessaire d'isoler le gaz ou tout autre fluide de mise sous pression de la résine à injecter.

De plus, un circuit d'injection comportant un tel dispositif de maintien en pression est censé permettre l'isolation du cylindre injecteur.

Lors de l'isolation du cylindre injecteur, celui-ci n'est plus à même de jouer le rôle de capacité de résine, et le circuit d'injection qui est isolé n'est pas capable de proposer à lui seul une capacité de résine capable de contrer le rétreint de la résine dans le moule lors de sa polymérisation. Il peut donc s'ensuivre l'apparition de manques de résine sur la pièce finie.

Le document FR 297 56 29 A1 divulgue un dispositif de maintien en pression d'un système d'injection de résine comportant: 11
- une chambre apte à être reliée à des moyens de mise sous pression; 11
- une deuxième chambre apte à être reliée à réseau d'injection de résine du système d'injection au moyen d'une canalisation d'injection de résine et d'une canalisation de sortie de résine, ladite première chambre et ladite deuxième chambre étant agencées de manière étanche l'une par rapport à l'autre; 11
- des moyens aptes à transmettre une mise sous pression de ladite première chambre vers ladite deuxième chambre de manière à exercer une pression sur ledit réseau d'injection du système d'injection. 11

### EXPOSÉ DE L'INVENTION

Dans ce contexte, l'invention vise à proposer un moyen permettant de maintenir la pression dans le circuit d'injection en évitant tout risque d'injection parasite de gaz dans le circuit d'injection, et permettant par ailleurs de proposer une capacité additionnelle de résine apte à contrer le phénomène de rétreint de résine dans le moule lors de sa polymérisation.

A cette fin, l'invention propose un circuit d'injection de résine dans un moule de fabrication d'une pièce composite conformément à l'objet de la revendication 1.

Selon d'autres caractéristiques du régulateur :
- dans un mode de réalisation, la seconde cavité est configurée pour recevoir un gaz sous pression, notamment de l'azote,
- selon l'invention, la cavité est formée dans une chemise tubulaire et le moyen de paroi mobile comporte un piston coulissant mobile dans ladite chemise tubulaire, ledit piston délimitant dans ladite chemise tubulaire une première chambre formant la première cavité et une seconde chambre de mise sous pression formant la seconde cavité configurée pour être reliée à la source de fluide sous pression,
- selon un mode de réalisation, la chemise est configurée pour que la première chambre puisse présenter un volume initial minimal permettant de délivrer une quantité de résine au moins égale à une variation du volume de résine contenu dans ladite partie de circuit entre un instant survenant immédiatement après l'injection de la résine dans le circuit et le moule d'injection, et un instant correspondant à une polymérisation complète de la résine dans le moule d'injection,
- selon un mode de réalisation, le régulateur comporte un moyen de chauffage d'au moins la première chambre et un moyen de contrôle de la température d'au moins la première chambre,
- conformément à l'invention, le régulateur d'injection comporte :
   - un corps principal axial tubulaire,
   - la chemise tubulaire, présentant une même longueur axiale que le corps principal, et reçue dans ledit corps principal,
   - le piston, sensiblement de même diamètre que la chemise tubulaire, et comportant un moyen d'étanchéité dynamique avec ladite chemise tubulaire,
   - un premier couvercle, configuré pour fermer une première extrémité dudit corps principal et une première extrémité de la chemise, et comportant un premier conduit de passage de résine débouchant dans ladite chemise,
   - un second couvercle, configuré pour fermer une seconde extrémité dudit corps principal et une seconde extrémité de la chemise, et comportant un second conduit de passage de fluide débouchant dans ladite chemise, et
   - des premier et second moyens d'étanchéité statique interposés entre ladite chemise et les premier et second couvercles,
- dans un mode de réalisation, le régulateur d'injection comporte au moins un élément chauffant interposé entre la chemise et le corps, au moins un moyen de mesure de la température de la chemise interposé entre la chemise et le corps, et au moins des moyens de connexion dudit élément chauffant et dudit moyen de mesure, qui traversent au moins un des premier ou second couvercles.

Selon d'autres caractéristiques d'un second mode de réalisation du circuit d'injection :
- le circuit d'injection comporte au moins :
   - un cylindre injecteur de résine,
   - un moule d'injection comportant au moins une première partie comportant une empreinte apte à recevoir la préforme et au moins une deuxième partie apte à fermer l'empreinte,
   - un piège à résine mis au vide par une pompe à vide,
   - une première partie de circuit d'injection reliant le cylindre injecteur au moule d'injection,
   - une seconde partie de circuit d'injection reliant le moule d'injection au piège à résine,
   - un dispositif de préchauffage de résine interposé dans la première partie de circuit,
   - une purge de résine interposée entre le cylindre injecteur de résine et le dispositif de préchauffage de résine dans la première partie de circuit,
   - des vannes d'ouverture/fermeture de résine interposées dans la première partie de circuit de part et d'autre du dispositif de préchauffage et en amont de la purge d'une part, et dans la seconde partie de circuit d'autre part, permettant de contrôler l'ouverture ou la fermeture desdites première et seconde parties de circuit,
   - deux régulateurs d'injection reliés respectivement aux première et seconde parties de circuit par leurs premiers conduits,
   - une source de fluide sous pression reliée aux seconds conduits des régulateurs d'injection, et
   - des vannes d'ouverture/fermeture de fluide disposées en sortie de la source de fluide sous pression et en entrée des seconds conduits des régulateurs d'injection, permettant de contrôler la mise sous pression en fluide des régulateurs d'injection.
- le premier régulateur d'injection est relié au premier circuit entre une vanne de sortie du dispositif de préchauffage et le moule, et le second régulateur d'injection est relié au second circuit entre le moule et le piège à résine mis au vide.

L'invention concerne encore un procédé de commande d'un circuit d'injection conformément à la revendication 7.

L'invention concerne enfin un procédé de fabrication d'une pièce composite, notamment une pièce composite de turbomachine à partir d'une préforme imprégnée de résine dans un moule alimenté par un circuit d'injection de résine selon la revendication 8.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue schématique d'un circuit d'injection et d'un moule selon un premier état antérieur de la technique,
- la figure 2 est une vue schématique d'un circuit d'injection selon un premier mode de réalisation qui n'est pas couvert par les revendications 1 à 8,
- la figure 3 est une vue schématique d'un régulateur d'injection de résine selon le premier mode de réalisation qui n'est pas couvert par les revendications 1 à 8,
- la figure 4 est un diagramme bloc représentant les étapes d'un procédé de commande d'un circuit d'injection selon le premier mode de réalisation qui n'est pas couvert par les revendications 1 à 8,
- la figure 5 est une vue schématique d'un circuit d'injection et d'un moule selon un second état antérieur de la technique,
- la figure 6 est une vue schématique d'un circuit d'injection et d'un moule selon un mode de réalisation de l'invention,
- la figure 7 est une vue schématique en coupe d'un régulateur d'injection de résine selon le mode de réalisation de l'invention,
- la figure 8 est une vue en perspective éclatée d'un régulateur d'injection de résine selon le mode de réalisation de l'invention,
- la figure 9 est un diagramme bloc représentant les étapes d'un procédé de commande d'un circuit d'injection selon le mode de réalisation de l'invention ;
- la figure 10 est un diagramme bloc représentant les étapes d'un procédé de fabrication d'une pièce de turbomachine selon l'invention.

Dans la description qui va suivre, des chiffres de référence identiques désignent des pièces identiques ou ayant des fonctions similaires.

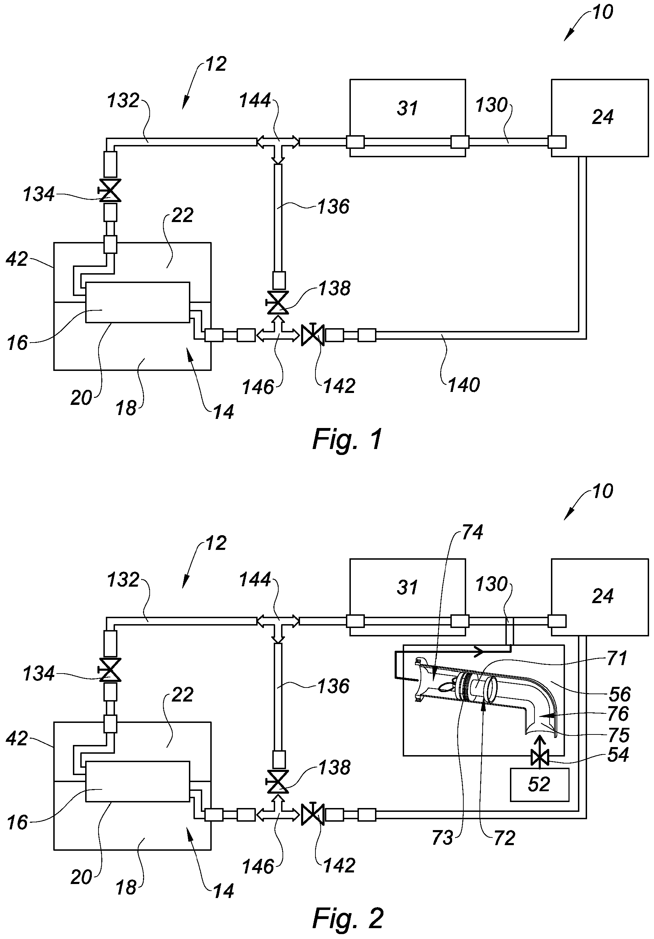

On a représenté à la figure 1 une installation d'injection RTM 10 selon un premier état antérieur de la technique.

De manière connue l'installation d'injection RTM 10 comprend un circuit d'injection 12 et un moule 14 destinés à la fabrication d'une pièce telle qu'une aube de soufflante de turbomachine à partir d'une préforme 16 tissée. Le moule 14 comporte notamment une partie inférieure 18 comprenant une empreinte 20 destinée à recevoir la préforme 16, réalisée de préférence par tissage de fibres composites en trois dimensions, telles que des fibres de carbone, et à emprisonner cette préforme 16 dans ledit moule 14 en refermant sur la partie inférieure 18 une partie supérieure 22 dudit moule 14, afin d'injecter dans ledit moule 14 une résine polymère permettant d'imprégner les fibres de la préforme 16.

Les éléments du circuit d'injection 12 seront décrits d'amont en aval par rapport au sens d'écoulement de la résine dans le circuit, c'est-à-dire de la droite vers la gauche de la figure 1.

De manière connue, le circuit d'injection 12 comporte au moins un cylindre injecteur de résine 24, qui est destiné à approvisionner le circuit 12 en résine et à soumettre cette résine à une pression déterminée permettant l'injection de ladite résine au travers du circuit 12 jusque dans le moule 14.

Le circuit d'injection 12 comporte, en aval du cylindre injecteur de résine 24 et en amont du moule 14, de manière classique, un dispositif de préchauffage de résine 31 qui est interposé dans le circuit 12 afin de permettre le préchauffage de la résine avant son injection dans le moule 14. Le moule 14 est par ailleurs placé dans une étuve 42, comme représenté à la figure 1, ou en variante, (non représentée), sous une presse chauffante.

Pour relier ces éléments, le circuit 12 comporte une première branche de circuit 130 reliant une sortie du cylindre injecteur de résine 24 à une entrée du dispositif 31 de préchauffage de résine. Le circuit 12 comporte aussi une deuxième branche de circuit 132 reliant une sortie du dispositif 31 de préchauffage de résine à une entrée du moule d'injection 14 par l'intermédiaire d'une vanne primaire d'ouverture/fermeture 134 de résine, une troisième branche de circuit 136 reliant une sortie du dispositif 31 de préchauffage de résine à une sortie du moule d'injection 14 par l'intermédiaire d'une vanne secondaire 138 d'ouverture/fermeture de résine, et une quatrième branche 140 de circuit reliant une sortie du moule d'injection 14 au cylindre injecteur de résine 24, par l'intermédiaire d'une vanne tertiaire 142 d'ouverture/fermeture de résine.

Pour simplifier les raccords des différentes branches du circuit 12, les deuxième et troisième branches 132, 136 sont reliées l'une à l'autre en sortie du dispositif de réchauffage 31 par un raccord en T 144, et les troisième et quatrième branches 136, 140 sont reliées l'une à l'autre en sortie du moule 14 par un raccord en T 146.

Dans cette configuration, l'injection de résine dans le moule 14 est réalisée successivement en plusieurs étapes. Au cours d'une première étape F1 on ouvre les vannes primaire et tertiaire d'ouverture/fermeture de résine 134, 142 et on ferme la vanne secondaire d'ouverture/fermeture de résine 136, et on actionne le cylindre injecteur de résine 24. La résine traverse le dispositif 31 de chauffage, passe à travers la première branche de circuit 132, remplit le moule 14, sort du moule 14 et retourne dans le cylindre injecteur 24 de résine.

Puis, au cours d'une étape F2, on ferme la vanne tertiaire d'ouverture/fermeture de résine 142 et on ouvre la vanne secondaire d'ouverture/fermeture de résine 138, et on maintient la pression dans le circuit 12 à l'aide du cylindre injecteur 24 de résine jusqu'à ce que la résine polymérise dans le moule 14.

De ce fait, la résine contenue dans le moule 14 est maintenue sous pression ce qui permet en principe d'éviter l'apparition de défauts de porosité dans la pièce finale, le maintien de la pression permettant d'éviter le dégazage de la résine.

Toutefois, on a constaté que cette conception présente un certain nombre d'inconvénients.

En premier lieu, on a constaté qu'il était nécessaire de faire circuler une grande quantité de résine au travers du moule 14 et au travers des première et troisièmes branches 132, 140 au cours de la première étape F1 avant de parvenir à éliminer toute bulle de gaz dans le circuit 12. Par ailleurs, cet objectif n'est pas nécessairement atteint car des bulles peuvent néanmoins subsister dans la deuxième branche 136, bulles qui peuvent se trouver entraînées dans le moule lors de la deuxième étape F2.

La présence de ces bulles dans le circuit 12 peut conduire à des dépôts de bulles de gaz à la surface de la préforme 16, avec pour conséquence l'apparition de défauts sur la pièce finie.

En second lieu, on a constaté que lors de la polymérisation de la résine dans le moule 14, celle-ci était sujette à un phénomène de rétreint dans le moule 14 et par conséquent dans les première et deuxième branches du circuit 132, 136. Par conséquent, la résine contenue dans ces branches pourrait ne pas suffire à absorber le déficit de résine dans le moule 14, créant ainsi des défauts dans la pièce finie.

En troisième lieu, la deuxième étape F2 est une étape de grande durée, qui présente l'inconvénient d'immobiliser le cylindre injecteur 24 pour maintenir la pression dans le circuit 12 de résine, quand bien même celui-ci pourrait être utilisé dans une autre installation d'injection RTM.

Il importe donc de proposer une nouvelle conception d'un circuit d'injection 12 permettant, d'une part, un maintien sous pression des première et deuxième branches 132, 136 du circuit sans nécessiter d'immobilisation du cylindre injecteur 24 et permettant, d'autre part, une fourniture améliorée de résine visant à pallier les conséquences du rétreint de la résine dans le moule 14.

Dans ce but, l'invention propose une nouvelle conception d'un circuit d'injection 12 pour une installation d'injection RTM 10 comportant au moins un régulateur d'injection 56 permettant de maintenir la pression de résine dans le circuit 12 en lieu et place du cylindre injecteur 24.

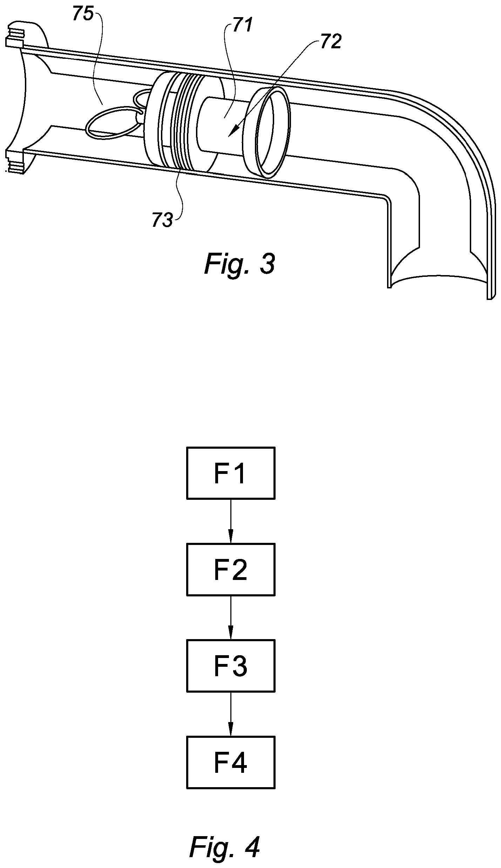

Un premier mode de réalisation d'un tel régulateur d'injection 56 a été représenté à la figure 3. Ce mode de réalisation n'est pas couvert pas l'objet des revendiations 1 à 8.

D'une manière générale, selon l'invention, un régulateur d'injection 56 selon l'invention comporte au moins une enceinte 70 qui destinée à être reliée au circuit 12 et à l'intérieur de laquelle est mobile de manière étanche un moyen de paroi mobile 72. Ce moyen de paroi mobile 72 délimite dans l'enceinte 70 une première cavité 74, formant un réservoir d'accumulation de résine, qui est configurée pour être reliée à au moins une partie du circuit 12, et une seconde cavité 76 configurée pour être reliée à une source de fluide sous pression 52. Le moyen de paroi mobile 72 est configuré pour être sollicité par le fluide sous pression fourni par la source de fluide sous pression 52 à la seconde cavité 76 afin d'exercer une pression sur la résine contenue dans la première cavité, en isolant ladite résine dudit gaz.

Plus particulièrement, dans ce premier mode de réalisation d'un régulateur d'injection 56, non couvert par les revendications 1 à 8, l'enceir est constituée d'une branche 70 du circuit 12. Le moyen de paroi mobile 72 est constitué d'un racleur coulissant 72 de diamètre correspondant à un diamètre interne de ladite branche 70, et reçu dans ladite branche 70.

Le racleur coulissant 72 est racleur semblable aux racleurs bien connus de l'état de la technique. Pour l'essentiel, un racleur 72 comporte un axe central 71 sur lequel sont monté des coupelles d'étanchéité 73 agencées au contact de la paroi interne 75 de la branche 70, et ce faisant, qui assurent la motricité du racleur 72 lorsqu'il est soumis à la pression fournie par la source de fluide sous pression 52.

Le racleur coulissant 72 délimite dans la branche 70 un premier tronçon 74, constituant la première cavité formant un réservoir d'accumulation de résine, et un second tronçon 76 constituant la seconde cavité configurée pour être relié à la source de fluide sous pression 52.

De préférence, le fluide sous pression alimentant le second tronçon 76 est un gaz sous pression, notamment de l'azote.

Dans le mode de réalisation préféré non couvert par les revendications 1 à 8, le circuit 12 comporte un seul régulateur de pression 56 qui est est configuré pour être agencé en parallèle de la première branche 130 du circuit. Aussi, la branche 70 du régulateur 56 est-elle réalisée de préférence, comme l'illustre la figure 2, sous la forme d'une cinquième branche de circuit 70 qui est reliée d'une part à une entrée du dispositif 31 de préchauffage de résine parallèlement à la première branche de circuit 130, et d'autre part à la source de gaz sous pression 52 par l'intermédiaire d'une vanne d'ouverture/fermeture de fluide 54.

Il sera compris que cette configuration n'est pas limitative. Notamment, la cinquième branche 70 du régulateur pourrait être reliée en un autre point du circuit 12, pourvu qu'elle soit à même de soumettre le circuit 12 à une pression de résine suffisante pour permettre le remplacement du cylindre injecteur 24 en tant que source de pression. Il sera aussi compris que le circuit 12 pourrait comporter plus d'un régulateur du type du régulateur 56.

Dans cette configuration, un circuit d'injection 12 comportant un régulateur d'injection 56 peut être commandé, comme précédemment, selon une première étape F1 au cours de laquelle on ouvre les vannes primaire et tertiaire d'ouverture/fermeture de résine 132, 142, on ferme la vanne secondaire d'ouverture/fermeture de résine 138, et on actionne le cylindre injecteur de résine 24 pour remplir le moule 14. Pendant cette étape L1, le cylindre injecteur de résine 24 remplit le premier tronçon 74 du régulateur 56 avec de la résine liquide.

Puis, similairement au procédé connu de l'état de la technique, au cours d'une étape F2, on ouvre la vanne secondaire d'ouverture/fermeture de résine 138 et on ferme la vanne tertiaire d'ouverture/fermeture de résine 142. La résine est alors mise sous mise sous pression dans tout le circuit par le cylindre injecteur de résine 24.

Le procédé comporte alors une nouvelle étape F3 au cours de laquelle on ouvre la vanne d'ouverture/fermeture de fluide 54 de la source de fluide 52 sous pression. De ce fait, le régulateur 52 soumet aussi la résine du circuit 12 à une pression.

Avantageusement, au cours d'une dernière étape F4, on débranche le cylindre injecteur de résine 24. La pression demeure maintenue par le régulateur de pression 56.

Une caractéristique particulièrement avantageuse est que le régulateur est formé d'une cinquième branche 70 qui peut être d'un diamètre correspondant au diamètre des autres branches du circuit. Cette configuration permet de tirer parti de la mobilité du racleur 72 dans les branches du circuit. En effet, du fait du phénomène de rétreint de la résine dans le circuit, le racleur 72 peut être amené à quitter la cinquième branche 70 et à pénétrer dans le reste du circuit, par exemple en amont du dispositif de préchauffage 31, tout en maintenant l'exercice d'une pression sur la résine dans le circuit. On garantit ainsi que la pression est maintenue sur la résine dans le circuit 12 en toutes circonstances.

Comme on l'a vu, un régulateur de pression permet d'isoler une capacité de résine d'un gaz, ce gaz soumettant néanmoins la résine à une pression sans interférer directement avec elle, par l'intermédiaire d'une paroi mobile. Cette configuration trouve tout son intérêt dans le perfectionnement d'installations 10 de moulage RTM connues de l'état de la technique et comportant déjà des moyens de mise sous pression de la résine, mais qui présentent l'inconvénient de réaliser cette mise sous pression de manière perfectible, le gaz sollicitant directement la résine.

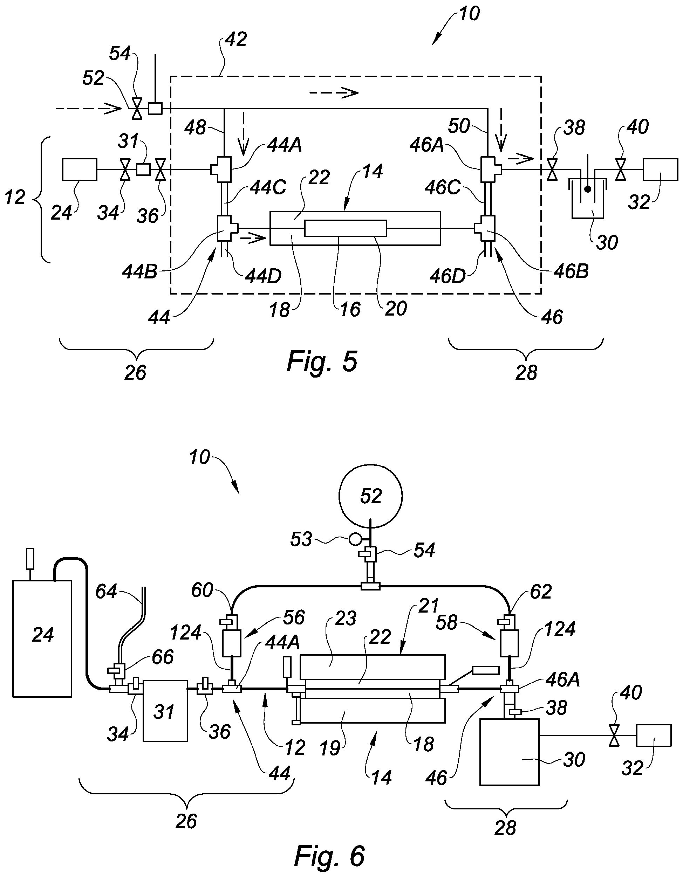

On a représenté à la figure 5 un exemple d'une installation d'injection RTM 10 selon un second état antérieur de la technique comprenant un circuit d'injection 12 et un moule 14 destinés à la fabrication d'une pièce telle qu'une aube de soufflante de turbomachine à partir d'une préforme 16 tissée. Le moule 14 comporte comme précédemment une partie inférieure 18 comprenant une empreinte 20 destinée à recevoir la préforme 16, réalisée de préférence par tissage de fibres composites en trois dimensions, telles que des fibres de carbone, et à emprisonner cette préforme 16 dans ledit moule 14 en refermant sur la partie inférieure 18 une partie supérieure 22 dudit moule 14, afin d'injecter dans ledit moule 14 une résine polymère permettant d'imprégner les fibres de la préforme 16.

Les éléments de ce circuit d'injection 12 seront décrits d'amont en aval par rapport au sens d'écoulement de la résine dans le circuit, c'est-à-dire de la gauche vers la droite de la figure 5.

De manière connue, le circuit d'injection 12 comporte au moins un cylindre injecteur de résine 24, qui est destiné à approvisionner le circuit 12 en résine et à soumettre cette résine à une pression déterminée permettant l'injection de ladite résine au travers du circuit 12 jusque dans le moule 14.

Le circuit d'injection 12 comporte, en aval du cylindre injecteur de résine 24 et en amont du moule 14, une première partie de circuit 26, qui relie par conséquent le cylindre injecteur de résine 24 au moule 14. Le circuit d'injection 12 comporte, en aval du moule 14, une seconde partie de circuit 28 reliant le moule 14 à un piège à résine 30 qui est destiné à recevoir la résine en excès s'échappant du moule 14. En aval du piège à résine 30, le circuit d'injection 12 comporte une pompe à vide 32 destinée maintenir le circuit 12 et l'empreinte 20 du moule 14 au vide, ce qui permet de supprimer toute trace d'air dans le circuit et dans l'empreinte 20, tout en aspirant la résine au travers du circuit 12. La pompe à vide 32 permet ainsi de faciliter le remplissage du circuit 12 et de l'empreinte 20 avec la résine. Une fois le circuit 12 rempli, la pompe à vide 32 attire la résine dans le piège à résine 30.

Cette configuration permet de manière classique de s'assurer que la résine injectée au travers de la première partie de circuit 26 dans le moule 14 soit exempte de bulles d'air dans le moule 14, en contrôlant la présence ou l'absence de bulles d'air dans la résine sortant du moule 14, la présence ou l'absence de bulles d'air étant contrôlée en examinant la résine acheminée dans le piège à résine 30 par la seconde partie de circuit 28.

Le circuit d'injection 12 comporte en outre, de manière classique, un dispositif de préchauffage de résine 31 qui est interposé dans la première partie de circuit 26 afin de permettre le préchauffage de la résine avant son injection dans le moule 14. Le dispositif de préchauffage de résine 31 peut être isolé sélectivement du circuit 12 par l'intermédiaire d'une première vanne d'ouverture/fermeture de résine 34, agencée en amont du dispositif de préchauffage de résine 31, et par l'intermédiaire d'une deuxième vanne d'ouverture/fermeture de résine 36, agencée en aval du dispositif de préchauffage de résine 31.

D'une manière analogue, le circuit d'injection 12 comporte une troisième vanne d'ouverture/fermeture de résine 38, agencée en amont du piège à résine 30, et une quatrième vanne d'ouverture/fermeture de résine 40 agencée en aval du piège à résine 30.

Le moule 14 est par ailleurs placé dans une étuve 42, comme représenté à la figure 5, ou en variante, (non représentée), sous une presse chauffante.

Le circuit d'injection 12 illustré à la figure 5 comporte en outre deux dispositifs de maintien en pression 44 et 46 qui sont situés de part et d'autre du moule d'injection 14. Les dispositifs 44 et 46 permettent d'appliquer une pression de maintien sur la résine dans les première et deuxième parties de circuit 26, 28.

Les dispositifs de maintien en pression 44 et 46 sont positionnés respectivement sur la première partie de circuit 26 en amont du moule d'injection 14 et sur la deuxième partie de circuit 28 en aval du moule d'injection 14. Les dispositifs de maintien en pression 44 et 46 selon l'état de la technique sont situés à proximité du moule d'injection 14, et plus particulièrement au plus près de l'entrée et de la sortie du moule d'injection 14. Lorsque l'installation d'injection RTM 10 est pourvue d'une étuve 42, ces dispositifs de maintien en pression 44 et 46 peuvent être placés dans ladite étuve 42. Toutefois, cette configuration est problématique, car les dispositifs de maintien en pression 44 et 46 ne comportent pas de moyens intrinsèques de régulation de la température, celle-ci étant imposée dans le meilleur des cas de manière grossière par l'étuve.

Les dispositifs de maintien en pression 44 et 46 sont également raccordés, au moyen de canalisations 48, 50, à une source de gaz 52 sous pression apte à injecter du gaz dans les canalisations 48, 50. A cet effet, une vanne d'ouverture/fermeture de fluide 54 est agencée en sortie de la source de gaz 52 pour autoriser ou interrompre la distribution de gaz sous pression dans les canalisations 48,50.

Chaque dispositif de maintien sous pression 44, 46 est formé par un premier té de raccord correspondant 44A, 46A et par un deuxième té de raccord 44B, 46B, les deux tés étant raccordés par une canalisation 44C, 46C adaptée pour être mise sous pression.

Les premier et deuxième tés de raccord 44A, 44B du dispositif de maintien de pression 44 qui est interposé dans la première partie du circuit 26 permettent donc d'introduire du gaz sous pression dans la première partie du circuit 26 et permettent ainsi le maintien d'une pression sur la résine dans le circuit 12.

Ainsi, le premier té 44A de la première partie de circuit 26 permet la sollicitation de la résine dans la première partie de circuit 26, le gaz sous pression étant acheminé par la canalisation 48 depuis la source de gaz 52 jusqu'au premier té 44A de la première partie de circuit 26. De même le premier té 46A de la seconde partie de circuit 28 permet la sollicitation de la résine dans la seconde partie de circuit 28, le gaz sous pression étant acheminé par la canalisation 50 depuis la source de gaz 52 jusqu'au premier té 46A de la seconde partie de circuit 28.

Chaque deuxième té 44B, 46B comporte un capteur de pression associé 44D, 46D qui permet de détecter le début de polymérisation de la résine dans le deuxième té 44B, 46B et, par conséquent, dans le moule 14.

Lors de la mise sous pression du circuit d'injection 12 par les dispositifs 44, 46 tous deux alimentés par la source de gaz 52, le gaz sous pression arrive par la partie supérieure des tés 44A, 46A de manière à transmettre la pression à la préforme 16. Le cylindre injecteur 24 est par ailleurs isolé du premier circuit 26 par l'intermédiaire des premières et deuxième vannes d'ouverture/fermeture de résine 34, 36.

De ce fait, la résine contenue dans le moule 14 est maintenue sous pression ce qui permet en principe d'éviter l'apparition de défauts de porosité dans la pièce finale.

Toutefois, on a constaté que cette conception présente un certain nombre d'inconvénients.

En premier lieu, du fait du contact direct entre le gaz acheminé dans les dispositifs de maintien sous pression 44, 46 et la résine circulant dans les première et deuxième parties de circuit de 26, 28, il existe un risque non négligeable de passage de bulles de gaz dans les première et deuxième partie de circuit 26, 28 et dans le moule 14 ce qui peut conduire à des dépôts de bulles de gaz à la surface de la préforme 16, avec pour conséquence l'apparition de défauts sur la pièce finie.

En second lieu, on a constaté que lors de la polymérisation de la résine dans le moule 14, celle-ci était sujette au phénomène connu de rétreint dans le moule 14 et dans les première et deuxième parties de circuit 26, 28, et que par conséquent la résine contenue dans lesdites première et deuxième parties de circuit 26, 28 pouvait ne pas suffire à absorber le déficit de résine dans le moule 14, créant ainsi des défauts dans la pièce finie.

L'invention propose dans ce type de configuration une nouvelle conception d'un circuit d'injection 12 permettant d'une part un maintien sous pression des première et deuxième parties de circuit de résine 26, 28 en éliminant tout risque d'introduction de gaz, et permettant d'autre part une fourniture améliorée de résine visant à pallier les conséquences du rétreint de la résine dans le moule 14.

Dans ce but, l'invention propose une nouvelle conception des dispositifs de maintien sous pression 44, 46 comportant des régulateurs d'injection de résine 56, 58.

Similairement au premier mode de réalisation non couvert par les revendications 1 à 8, chaque régulateur d'injection de résine 56, 58 permet de maintenir la pression sur la résine contenue dans la première ou deuxième partie de circuit 26, 28 à laquelle il est branché en évitant par ailleurs toute introduction de gaz dans ladite partie de circuit 26, 28. Par ailleurs, chaque régulateur d'injection de résine 56, 58 forme une capacité de résine capable de compenser le rétreint de la résine dans la partie de circuit 26, 28 correspondante lors de sa polymérisation.

La figure 6 représente une installation d'injection RTM 10 réalisée conformément à un mode de réalisation de l'invention. Similairement à l'installation précédemment décrite en référence à l'état de la technique, l'installation d'injection RTM 10 comprend un circuit d'injection 12 et un moule 14 destinés à la fabrication d'une pièce telle qu'une aube de soufflante de turbomachine. Le moule 14 comporte notamment une partie inférieure 18 comprenant une empreinte (non représentée) destinée à recevoir une préforme, et une partie supérieure 22 destinée à être refermée sur la partie inférieure 18. Ces parties sont par exemple disposées entre les deux parties inférieure 19 et supérieure 23 d'une presse chauffante 21.

Le circuit d'injection 12 comporte un cylindre injecteur de résine 24, qui est destiné à approvisionner le circuit 12 en résine et à soumettre cette résine à une pression déterminée permettant l'injection de ladite résine au travers du circuit 12 jusque dans le moule 14.

Le circuit d'injection 12 comporte, en aval du cylindre injecteur de résine 24 et en amont du moule 14, une première partie de circuit 26, qui relie par conséquent le cylindre injecteur de résine 24 au moule 14. Le circuit d'injection 12 comporte, en aval du moule 14, une seconde partie de circuit 28 reliant le moule 14 à un piège à résine 30 qui est destiné à recevoir la résine en excès s'échappant du moule 14. Le piège à résine 30 est mis au vide, c'est-à-dire qu'il comporte une pompe à vide interne (non représentée), destinée à aspirer la résine au travers du circuit 12 pour l'attirer dans le piège à résine 30.

Le circuit d'injection 12 comporte aussi un dispositif de préchauffage de résine 31 qui est interposé dans la première partie de circuit 26 afin de permettre le préchauffage de la résine avant son injection dans le moule 14, et qui peut être isolé sélectivement du circuit 12 par l'intermédiaire d'une première vanne d'ouverture/fermeture de résine 34, agencée en amont du dispositif de préchauffage de résine 31, et par l'intermédiaire d'une deuxième vanne d'ouverture/fermeture de résine 36, agencée en aval du dispositif de préchauffage de résine 31.

Le circuit d'injection 12 comporte une troisième vanne d'ouverture/fermeture de résine 38, agencée en amont du piège à résine 30.

Le circuit d'injection 12 illustré à la figure 6 comporte en outre deux dispositifs de maintien en pression 44 et 46 situés de part et d'autre du moule d'injection 14. Les dispositifs 44 et 46 permettent comme précédemment d'appliquer une pression de maintien sur la résine dans les première et deuxième parties de circuit 26, 28.

Les dispositifs de maintien en pression 44 et 46 sont positionnés respectivement sur la première partie de circuit 26 en amont du moule d'injection 14 et sur la deuxième partie de circuit 28 en aval du moule d'injection 14. Les dispositifs de maintien en pression 44 et 46 sont situés à proximité du moule d'injection 14, et plus particulièrement au plus près de l'entrée et de la sortie du moule d'injection 14.

A la différence de la réalisation précédemment connue de l'état de la technique, ces dispositifs de maintien en pression 44 et 46 comportent les régulateurs d'injection 56 et 58 qui sont raccordés par des canalisations 48, 50 à une source de fluide 52 sous pression, ici une source de gaz 52 sous pression.

De préférence, le premier régulateur d'injection 56 est relié à la première partie de circuit 26 entre la deuxième vanne 36 de sortie du dispositif de préchauffage 31 et le moule 14, et le second régulateur d'injection 58 est relié à la seconde partie de circuit 28 entre le moule 14 et le piège à résine 30 mis au vide par une pompe à vide 32.

Dans le mode de réalisation préféré de l'invention, on a représenté une source de gaz 52, mais il sera compris que les régulateurs d'injection 56, 58 pourraient être mis sous pression par l'intermédiaire d'une source de fluide sous pression d'un autre type, notamment une source de pression hydraulique. Le gaz utilisé dans le cas présent est de préférence de l'azote.

Similairement à la configuration précédente, une vanne d'ouverture/fermeture de fluide 54 est agencée en sortie de la source de gaz 52 pour autoriser ou interrompre la distribution de gaz sous pression dans les canalisations 48, 50. Un dispositif de mesure de pression 53 tel qu'un manomètre permet de mesurer la pression en sortie de la source de gaz 52.

Chaque dispositif de maintien sous pression 44, 46 comporte un premier té de raccord 44A, 46A qui est interposé dans la première ou deuxième partie de circuit 26, 28 correspondante, et qui est relié au régulateur d'injection correspondant 56, 58.

Des vannes d'ouverture/fermeture de fluide 60, 62 sont par ailleurs agencées en entrée des régulateurs d'injection 56, 58 pour contrôler la mise sous pression en gaz desdits régulateurs d'injection 56, 58.

Le circuit d'injection 12 comporte par ailleurs une purge de résine 64 qui est interposée entre le cylindre injecteur de résine 24 et le dispositif de préchauffage de résine 31 dans la première partie de circuit 26. La purge de résine 64 est reliée à la première partie de circuit 26 par l'intermédiaire d'une vanne 66. La purge de résine 64 permet si l'on le désire de visualiser l'arrivée de la résine dans la première partie de circuit 26 dès lors que le cylindre injecteur de résine 24 a été activé.

On décrit à présent un des deux régulateurs d'injection de résine 56, 58 du circuit 12, réalisé conformément à l'invention.

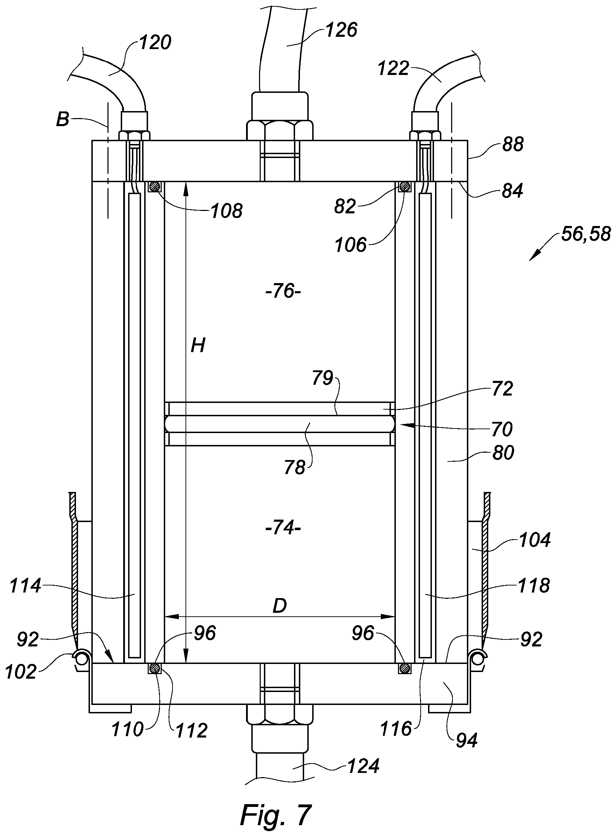

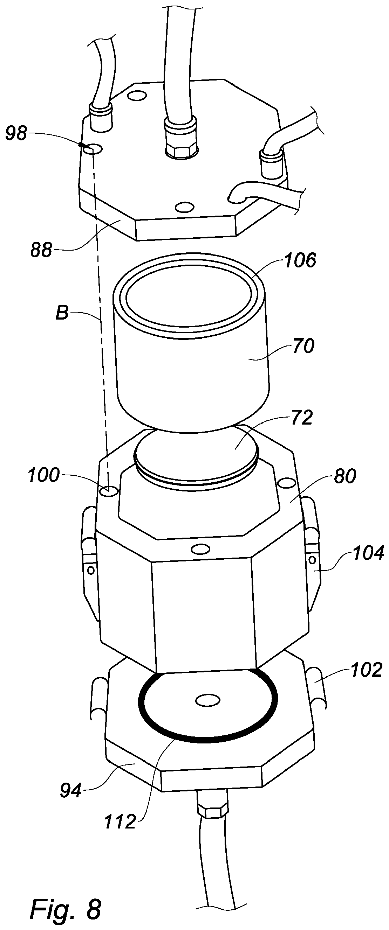

Comme l'illustrent les figures 7 et 8, chaque régulateur d'injection 56, 58 comporte au moins une enceinte formée d'une chemise tubulaire 70 à l'intérieur de laquelle est mobile un moyen de paroi mobile constitué d'un piston coulissant 72 qui délimite dans la chemise 70, comme l'illustre la figure 7, une première cavité formée d'une première chambre 74 d'accumulation de résine qui est configurée pour être reliée à une des parties de circuit 26, 28, et une seconde cavité formée d'une seconde chambre 76 de mise sous pression configurée pour être reliée à une source de fluide sous pression, en l'occurrence la source de gaz 52 précédemment décrite en référence à la figure 6.

Le piston 72 est configuré pour être sollicité par le gaz sous pression occupant la seconde chambre 76, et pour transmettre cette sollicitation en exerçant une pression sur la résine contenue dans la première chambre 74.

À cet effet, le piston 72 comporte un moyen d'étanchéité dynamique avec la paroi intérieure de la chemise tubulaire 70, par exemple un joint torique 78 reçu dans une gorge 79.

La chemise 70 est configurée pour que la première chambre 74 présente un volume initial minimal permettant de délivrer une quantité de résine au moins égale à une variation du volume de résine contenue dans la partie de circuit 26, 28 associée entre l'instant survenant immédiatement après l'injection de la résine dans le circuit 12 et dans le moule d'injection 14, et l'instant correspondant à une polymérisation complète de la résine dans le moule d'injection 14.

Cette configuration vise à garantir que la chemise 70 de chaque régulateur d'injection 56, 58 soit à même de proposer une capacité de résine minimale permettant de participer à l''absorption du rétreint de la résine contenue dans le moule 14 lors de sa polymérisation, conjointement avec la chemise 70 de l'autre régulateur d'injection.

Principalement, cette configuration résulte d'un dimensionnement de la chemise 70 permettant d'une part de proposer une première chambre 74 présentant une capacité de stockage de résine minimale compatible avec un volume initial de la seconde chambre 76 apte à permettre l'exercice d'une pression de gaz sur le piston 72 avec une efficacité suffisante. Il sera donc compris que cette configuration se traduit par un dimensionnement adéquat de la chemise 70 relativement à son diamètre interne D et de sa longueur H. Dans la pratique, lors de la mise sous pression de la chemise 70, la première chambre 74 présente une capacité de stockage de résine correspondant au volume interne de la chemise 70 au volume du piston 72 près, le piston 72 étant agencé à l'extrémité supérieure de la chemise 70 et le volume de la seconde chambre 72 étant minimal.

Dans le mode de réalisation préféré de l'invention, chaque régulateur d'injection 56, 58 comporte un moyen de chauffage d'au moins la première chambre 74, et un moyen de contrôle de la température de ladite première chambre 74.

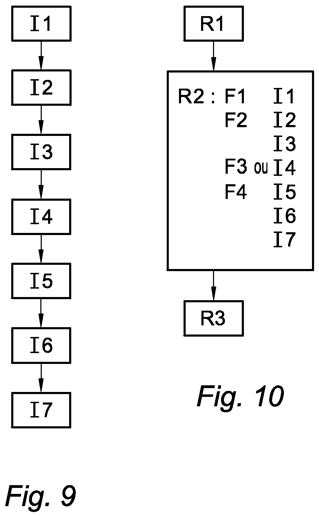

Ce moyen de chauffage peut être annoncé de manière compacte autour de la chemise 70, comme on va le voir en référence à un agencement particulièrement compact du régulateur d'injection 56, 58 qui a été représenté à la figure 10.

Comme l'illustrent les figures 7 et 8, chaque régulateur d'injection 56, 58 comporte un corps principal tubulaire 80 dans lequel est reçue la chemise 70. Sur la figure 4, on a représenté un corps principal tubulaire 80 de forme hexagonale mais il sera compris que cette configuration n'est pas limitative de l'invention. On remarquera avantageusement que de préférence, la chemise 70 est immobilisée en rotation dans le corps principal tubulaire 80. La chemise 70 reçoit le piston 72.

La chemise tubulaire 70 présente la même longueur axiale H que le corps principal tubulaire 80. De ce fait, des faces des extrémités 82, 96 de la chemise 70 sont alignées dans les mêmes plans que les faces des extrémités correspondantes 84, 92 du corps principal tubulaire 80.

Le corps principal tubulaire 80 est fermé à une première extrémité 92 par un premier couvercle 94, qui par conséquent ferme aussi une première extrémité 96 de la chemise tubulaire 70.

De même, le corps principal tubulaire 80 est fermé à une seconde extrémité 84 par un second couvercle 88, qui par conséquent ferme aussi une seconde extrémité 82 de la chemise tubulaire 70.

De même, le second couvercle 88 est fixé sur le corps 80 par l'intermédiaire de vis d'axes B (non représentées) qui traversent des perçages 98 du second couvercle 88 et qui sont reçues dans des taraudages 100 du corps 80.

De manière non limitative de l'invention, le premier couvercle 94 est fixé sur le corps 80 par l'intermédiaire de crochets 102, qui s'étendent de part et d'autre du premier couvercle 94 et qui sont maintenus par des dispositifs d'accrochage 104 s'étendant de part et d'autre du corps 80. Il sera compris que tout autre moyen de fixation connu de l'état de la technique peut convenir à la bonne fixation du premier couvercle 84 dur le corps 80.

Un premier moyen d'étanchéité statique 110, notamment un joint torique 110, est interposé entre la chemise 70 et le premier couvercle 94. Par exemple, ce joint torique 108 est reçu dans une gorge 112 formée dans le premier couvercle 94.

Un second moyen d'étanchéité statique 106, notamment un joint torique 106, est interposé entre la chemise 70 et le second couvercle 88.

Par exemple, ce joint torique 106 est reçu dans une gorge 108 formée à la seconde extrémité 90 de la chemise 70.

Pour assurer le chauffage d'au moins la première chambre, le régulateur d'injection 56, 58 comporte, comme l'illustre la figure 7, au moins un élément chauffant 114 qui est interposé entre la chemise 70 et le corps 80.

Avantageusement, il est possible de tirer parti de la forme hexagonale du corps 80 pour loger entre le corps 80 et la chemise 70 des éléments chauffants 114. Il sera compris qu'une forme différente du corps 80, pour peu qu'un jeu radial suffisant soit formé entre ledit corps 80 et la chemise 70, permettrait également d'insérer des éléments chauffants 114.

Les éléments chauffants 114 sont par exemple constitués de bandes chauffantes ou de cartouches chauffantes, qui sont logées dans des cavités 116 formées entre la chemise 70 et le corps 80.

Chaque régulateur d'injection 56, 58 comporte au moins un moyen de mesure de la température de la première chambre 74. Ce moyen de mesure a été représenté à la figure 7 sous la forme d'une sonde 118 qui est logée dans une cavité 116 mais il sera compris que cette configuration n'est pas limitative de l'invention. La sonde 118 peut consister en un thermocouple.

Avantageusement, des moyens de connexion de l'élément chauffant 114 et du moyen de mesure 118 traversent le second couvercle 88. Ces moyens de connexion peuvent consister en des câbles 120 et 122. Ces moyens de connexion pourraient également traverser le premier couvercle 94 sans changer la nature de l'invention.

Le premier couvercle 94 comporte un premier conduit 124 de passage de résine débouchant dans la première chambre 74 de la chemise 70. De même, le second couvercle 88 comporte un second conduit de passage de fluide 126 débouchant dans la seconde chambre 76 de la chemise 70.

Dans cette configuration, chaque régulateur d'injection 56, 58 peut être mis en oeuvre dans le circuit d'injection de résine 12 en reliant sa première chambre 74 à la partie de circuit 26 ou 28 correspondante par l'intermédiaire de son premier conduit 124 et sa seconde chambre 76 à la source de gaz 52 sous pression par l'intermédiaire de son second conduit 126.

Dans cette configuration, comme l'illustre la figure 9, le circuit 12 d'injection peut être commandé selon un procédé dont les étapes vont être décrites ci-après.

Le procédé de commande du circuit 12 d'injection peut en premier lieu comporter une première étape I1 de purge au cours de laquelle on ouvre la vanne 66 d'ouverture/fermeture de résine de la purge 64 jusqu'à ce que la résine provenant du cylindre injecteur 24 apparaisse dans la purge 64. Cette étape n'est néanmoins pas indispensable.

Puis, au cours d'une deuxième étape I2 du procédé, on ferme ou on vérifie la fermeture de la vanne 66 d'ouverture/fermeture de résine de la purge 64 et on ouvre les première et deuxième vannes 34, 36 d'ouverture/fermeture de résine du dispositif de préchauffage 31 et on vérifie l'ouverture la troisième vanne 38 d'ouverture/fermeture de résine du piège à résine 30, jusqu'à ce que la résine, aspirée par la pompe à vide 32, apparaisse dans le piège à résine 30.

Puis au cours d'une troisième étape I3 du procédé, on ferme la troisième vanne 38 d'ouverture/fermeture de résine du piège à résine 30. La pression de résine augmente à mesure que le circuit 12 et l'empreinte se chargent de résine.

Puis au cours d'une quatrième étape I4 du procédé on connecte la source de gaz 52 aux régulateurs d'injection 56, 58 et on active les moyens de chauffage des régulateur 56, 58, c'est-à-dire les éléments chauffants 114 précédemment décrits.

Puis au cours d'une cinquième étape I5, on ferme la deuxième vanne 36 d'ouverture/fermeture de résine du dispositif de préchauffage 31, on ouvre les vannes d'ouverture/ fermeture de fluide 60, 62 disposées en sortie de la source 52 de gaz sous pression et en entrée des régulateurs d'injection 56, 58, puis on ouvre la vanne 54 d'ouverture/fermeture de fluide de la source de gaz 52 sous pression. À cet instant, les régulateurs de pression 56, 58 exercent et maintiennent une pression sur la résine contenue dans les première et seconde parties de circuit 26, 28. Du fait de la fermeture préalable de la deuxième vanne 36 d'ouverture/fermeture de résine du dispositif de préchauffage 31, les régulateurs 56, 56 n'exercent pas de pression sur la résine contenue dans le dispositif de préchauffage 31, ni sur l'injecteur 24.

Au cours d'une sixième étape I6, la pression de résine étant maintenue dans le circuit d'injection 12 par les régulateurs de pression 56, 58, on déconnecte le dispositif de préchauffage 31 et le cylindre injecteur de résine 24 pour les nettoyer avant que la résine qu'ils contiennent ne polymérise.

On voit là tout l'avantage de la conception selon l'invention, qui permet de maintenir la pression dans le circuit d'injection 12 tout en permettant la déconnexion du dispositif de préchauffage 31 et du cylindre injecteur de résine 24 afin d'en permettre le nettoyage avant que la résine ne polymérise. Par ailleurs, cette conception permet avantageusement de réutiliser le dispositif de préchauffage 31 et le cylindre d'injecteur de résine 24 dans un autre circuit d'injection avant même que la résine n'ait polymérisé dans le moule 14 qui a fait l'objet de la précédente injection.

La pression de gaz dans les régulateurs 56, 58, et par conséquent la pression qu'ils exercent sur le circuit d'injection 12, est maintenue au cours d'une septième étape I7 dont la durée correspond à la durée de polymérisation de la résine.

Quel que soit le mode de réalisation choisi de l'invention, comme l'illustre la figure 10, il est donc possible de mettre en oeuvre de manière très simple un procédé de fabrication d'une pièce composite de turbo machine à partir d'une préforme imprégnée de résine dans un moule 14 du type décrit précédemment. Ce procédé de fabrication comporte une première étape R1 d'introduction de la préforme 16 dans un moule d'injection 14 et de fermeture du moule 14, une deuxième étape R2 de mise en oeuvre des étapes F1 à F4 ou I1 à I7 des procédés de commande du circuit d'injection 12 qui ont décrits précédemment, et une troisième étape d'extraction R3 de la pièce finie hors du moule 14.

L'invention permet donc avantageusement d'améliorer la qualité de fabrication des pièces composites de turbomachine tout en augmentant les cadences de production.

## Revendications

1. Circuit d'injection (12) de résine dans un moule (14) de fabrication d'une pièce composite, notamment une pièce composite de turbomachine, ledit moule (14) étant apte à recevoir une préforme (16) à imprégner de résine, ledit circuit (12) comportant au moins un régulateur (56, 58) d'injection de résine comportant au moins une enceinte (70) qui est reliée audit circuit (12) et à l'intérieur de laquelle est mobile de manière étanche un moyen de paroi mobile (72), ledit moyen de paroi mobile (72) délimitant dans ladite enceinte une première cavité (74), formant un réservoir d'accumulation de résine, qui est reliée à au moins une partie (26) dudit circuit (12) alimentant ledit moule (14), et une seconde cavité (76) configurée pour être reliée à une source de fluide sous pression (52), ledit moyen de paroi mobile (72) étant configuré pour être sollicité par le fluide sous pression alimentant la seconde cavité (76) afin d'exercer une pression sur la résine contenue dans la première cavité (74), en isolant ladite résine dudit fluide,
ladite enceinte (70) étant formée d'une chemise tubulaire et le moyen de paroi mobile (72) comportant un piston coulissant mobile dans ladite chemise tubulaire, ledit piston délimitant dans ladite chemise tubulaire une première chambre formant la première cavité (74) et une seconde chambre de mise sous pression formant la seconde cavité (76) configurée pour être reliée à la source de fluide sous pression (52), le régulateur d'injection de résine comportant:
- un corps principal axial tubulaire (80),
- la chemise, présentant une même longueur axiale (H) que le corps principal (80), et reçue dans ledit corps principal (80),
- le piston, de même diamètre que la chemise tubulaire, et comportant un moyen d'étanchéité dynamique avec ladite chemise tubulaire,
- un premier couvercle (94), configuré pour fermer une première extrémité (92) dudit corps principal (80) et une première extrémité (96) de la chemise, et comportant un premier conduit (124) de passage de résine débouchant dans ladite chemise,
- un second couvercle (88), configuré pour fermer une seconde extrémité (84) dudit corps principal et une seconde extrémité (82) de la chemise, et comportant un second conduit (126) de passage de fluide débouchant dans ladite chemise,
- des premier et second moyens d'étanchéité statique (106, 110) interposés entre ladite chemise et les premier et second couvercles (88, 94).

2. Circuit d'injection de résine (12) selon la revendication précédente, **caractérisé en ce que** la seconde cavité (76)est configurée pour recevoir de l'azote.

3. Circuit d'injection de résine (12) selon l'une des revendications 1 ou 2, **caractérisé en ce qu'**il comporte un moyen de chauffage d'au moins la première chambre et un moyen de contrôle de la température d'au moins la première chambre.

4. Circuit d'injection de résine (12) selon la revendication 3, **caractérisé en ce qu'**il comporte au moins un élément chauffant (116) interposé entre la chemise et le corps (80), au moins un moyen (118) de mesure de la température de la chemise interposé entre la chemise et le corps (80), et au moins des moyens de connexion (120, 122) dudit élément chauffant (114) et dudit moyen de mesure (118), qui traversent au moins un des premier ou second couvercles (88, 94).

5. Circuit d'injection (12) de résine selon l'une des revendications précédentes, **caractérisé en ce qu'**il comporte au moins :
- un cylindre injecteur de résine (24),
- le moule d'injection (14) comportant au moins une première partie (18) comportant une empreinte apte à recevoir la préforme (16) et au moins une deuxième partie (22) apte à fermer l'empreinte,
- un piège à résine (30) mis au vide par une pompe à vide (32),
- une première partie (26) de circuit d'injection reliant le cylindre injecteur (24) au moule d'injection (14),
- une seconde partie (28) de circuit d'injection reliant le moule d'injection (14) au piège à résine (30),
- un dispositif (31) de préchauffage de résine interposé dans la première partie de circuit (26),
- une purge (64) de résine interposée entre le cylindre injecteur (24) de résine et le dispositif (31) de préchauffage de résine dans la première partie de circuit (26),
- des vannes d'ouverture/fermeture de résine (34, 36, 66) interposées dans la première partie de circuit (26) de part et d'autre du dispositif de préchauffage (31) et en amont de la purge (64) d'une part, et dans la seconde partie de circuit (28) d'autre part, permettant de contrôler l'ouverture ou la fermeture desdites première et seconde parties de circuit (26, 28),
- deux régulateurs d'injection (56, 58) reliés respectivement aux première et seconde parties de circuit (26, 28) par leurs premiers conduits (124),
- une source de fluide sous pression (52) reliée aux seconds conduits (126) des régulateurs d'injection (56, 58),
- des vannes d'ouverture/ fermeture de fluide (60, 62) disposées en sortie de la source de fluide sous pression et en entrée des seconds conduits (126) des régulateurs d'injection (56, 58), permettant de contrôler la mise sous pression en fluide des régulateurs d'injection (56, 58).

6. Circuit d'injection (12) de résine selon la revendication précédente, **caractérisé en ce que** le premier régulateur d'injection (56) est relié à la première partie de circuit (26) entre la deuxième vanne (36) de sortie du dispositif de préchauffage (31) et le moule (14), et **en ce que** le second régulateur d'injection (58) est relié à la seconde partie de circuit (28) entre le moule (14) et le piège à résine (30) mis au vide.

7. Procédé de commande d'un circuit d'injection (12) de résine selon la revendication 6, **caractérisé en ce qu'**il comporte successivement au moins:
- une étape (12) au cours de laquelle on vérifie la fermeture de la vanne (66) d'ouverture/fermeture de résine de la purge (64) et on ouvre les vannes d'ouverture/fermeture de résine (34, 36, 38) du dispositif de préchauffage (31) et du piège à résine (30) mis au vide jusqu'à ce que la résine apparaisse dans le piège à résine (30) mis au vide,
- une étape (I3) au cours de laquelle on ferme la vanne d'ouverture/fermeture de résine (38) du piège à résine (30) mis au vide,
- une étape (I4) au cours de laquelle on connecte la source de pression (24) aux régulateurs d'injection (56, 58), les moyens de chauffage desdits régulateurs (56, 58) étant activés.
- une étape (I5) au cours de laquelle on ferme la vanne d'ouverture/fermeture de résine (36) en sortie (36) du dispositif de préchauffage (31) et on ouvre les vannes d'ouverture/ fermeture de fluide (60, 62) alimentant les régulateurs d'injection 56, 58, puis au cours de laquelle on ouvre la vanne d'ouverture/ fermeture de fluide (54) de la source de fluide (52) sous pression,
- une étape (I6) au cours de laquelle on déconnecte le dispositif de préchauffage (31) et le cylindre injecteur (24) de résine et au cours de laquelle on les nettoie avant polymérisation de la résine,
- une étape (I7) au cours de laquelle on maintient la pression de fluide dans les régulateurs (56, 58) de pression pendant une durée déterminée, notamment pendant une durée de polymérisation de la résine dans le moule d'injection (14).

8. Procédé de fabrication d'une pièce composite, notamment une pièce composite de turbomachine à partir d'une préforme (16) imprégnée de résine dans un moule (14) alimenté par un circuit (12) d'injection de résine selon la revendication 6, **caractérisé en ce qu'**il comporte :
- une première étape (R1) d'introduction de la préforme (16) dans un moule d'injection (14) et de fermeture dudit moule d'injection (14),
- une deuxième étape (R2) de mise en oeuvre du procédé de commande du circuit d'injection (12) selon la revendication 7,
- un troisième (R3) étape d'extraction de la pièce hors du moule (14).

## Patentansprüche

1. Kreislauf (12) zum Einspritzen von Harz in eine Form (14) zur Herstellung eines Verbundteils, insbesondere eines Verbundteils einer Turbomaschine, wobei die Form (14) geeignet ist, eine mit Harz zu imprägnierende Vorform (16) aufzunehmen, wobei der Kreislauf (12) mindestens einen Harzeinspritzregler (56, 58) aufweist, der mindestens ein Gehäuse (70) aufweist, das mit dem Kreislauf (12) verbunden ist und in dessen Innerem ein bewegliches Wandmittel (72) dicht beweglich ist, wobei das bewegliche Wandmittel (72) in dem Gehäuse einen ersten Hohlraum (74) begrenzt, der einen Harzsammeltank bildet, der mit mindestens einem Teil (26) des die Form (14) versorgenden Kreislaufs (12) verbunden ist, und einen zweiten Hohlraum (76), der so konfiguriert ist, dass er mit einer Druckfluidquelle (52) verbunden ist, wobei das bewegliche Wandmittel (72) so konfiguriert ist, dass es von dem den zweiten Hohlraum (76) versorgenden Druckfluid beaufschlagt wird, um einen Druck auf das in dem ersten Hohlraum (74) enthaltene Harz auszuüben, wodurch das Harz von dem Fluid isoliert wird,
wobei das Gehäuse (70) aus einem rohrförmigen Mantel gebildet ist und das bewegliche Wandmittel (72) einen gleitenden Kolben umfasst, der in dem rohrförmigen Mantel beweglich ist, wobei der Kolben in dem rohrförmigen Mantel eine erste Kammer, die den ersten Hohlraum (74) bildet, und eine zweite Druckbeaufschlagungskammer, die den zweiten Hohlraum (76) bildet, begrenzt, die so konfiguriert ist, dass sie mit der Druckfluidquelle (52) verbunden werden kann,
wobei der Harzeinspritzregler aufweist:
- einen rohrförmigen axialen Hauptkörper (80),
- den Mantel, der die gleiche axiale Länge (H) wie der Hauptkörper (80) aufweist und in dem Hauptkörper (80) aufgenommen ist,
- den Kolben, mit demselben Durchmesser wie der rohrförmige Mantel, und der ein Mittel zur dynamischen Abdichtung mit dem rohrförmigen Mantel aufweist,
- einen ersten Deckel (94), der so konfiguriert ist, dass er ein erstes Ende (92) des Hauptkörpers (80) und ein erstes Ende (96) des Mantels verschließt, und der einen ersten Harzdurchgangskanal (124) aufweist, der in den Mantel mündet,
- einen zweiten Deckel (88), der so konfiguriert ist, dass er ein zweites Ende (84) des Hauptkörpers und ein zweites Ende (82) des Mantels verschließt, und der einen zweiten Fluiddurchgangskanal (126) aufweist, der in den Mantel mündet,
- erstes und zweites Mittel zur statischen Abdichtung (106, 110), die zwischen dem Mantel und dem ersten und zweiten Deckel (88, 94) eingefügt sind.

2. Harzeinspritzkreislauf (12) nach dem vorstehenden Anspruch, **dadurch gekennzeichnet, dass** der zweite Hohlraum (76) so konfiguriert ist, dass er Stickstoff aufnehmen kann.

3. Harzeinspritzkreislauf (12) nach einem der Ansprüche 1 oder 2, **dadurch gekennzeichnet, dass** er ein Mittel zum Heizen mindestens der ersten Kammer und ein Mittel zur Steuerung der Temperatur mindestens der ersten Kammer aufweist.

4. Harzeinspritzkreislauf (12) nach Anspruch 3, **dadurch gekennzeichnet, dass** er mindestens ein Heizelement (116) aufweist, das zwischen dem Mantel und dem Körper (80) eingefügt ist, mindestens ein Mittel (118) zum Messen der Temperatur des Mantels, das zwischen dem Mantel und dem Körper (80) eingefügt ist, und mindestens Verbindungsmittel (120, 122) des Heizelements (114) und des Messmittels (118), die mindestens einen der ersten oder zweiten Deckel (88, 94) durchqueren.

5. Harzeinspritzkreislauf (12) nach einem der vorstehenden Ansprüche, **dadurch gekennzeichnet, dass** er mindestens aufweist:
- einen Harzeinspritzzylinder (24),
- die Spritzgussform (14), die mindestens einen ersten Teil (18) aufweist, der einen Formhohlraum aufweist, der geeignet ist, die Vorform (16) aufzunehmen, und mindestens einen zweiten Teil (22), der geeignet ist, den Formhohlraum zu schließen,
- eine Harzfalle (30), die von einer Vakuumpumpe (32) evakuiert wird,
- einen ersten Teil (26) des Einspritzkreislaufs, der den Einspritzzylinder (24) mit der Spritzgussform (14) verbindet,
- einen zweiten Teil (28) des Einspritzkreislaufs, der die Spritzgussform (14) mit der Harzfalle (30) verbindet,
- eine Harzvorheizvorrichtung (31), die in dem ersten Teil des Kreislaufs (26) eingefügt ist,
- eine Harzentleerung (64), die zwischen dem Harzeinspritzzylinder (24) und der Harzvorheizvorrichtung (31) in dem ersten Teil des Kreislaufs (26) angeordnet ist,
- Harzöffnungs-/Schließventile (34, 36, 66), die im ersten Teil des Kreislaufs (26) auf beiden Seiten der Vorheizvorrichtung (31) und stromaufwärts der Entleerung (64) einerseits und im zweiten Teil des Kreislaufs (28) andererseits eingefügt sind, die es ermöglichen, das Öffnen oder Schließen des ersten und des zweiten Teils des Kreislaufs (26, 28) zu steuern,
- zwei Einspritzregler (56, 58), die über ihre ersten Kanäle (124) mit dem ersten bzw. zweiten Teil des Kreislaufs (26, 28) verbunden sind,
- eine Druckfluidquelle (52), die mit den zweiten Kanälen (126) der Einspritzregler (56, 58) verbunden ist,
- Fluidöffnungs-/-schließventile (60, 62), die am Ausgang der Druckfluidquelle und am Eingang der zweiten Kanäle (126) der Einspritzregler (56, 58) angeordnet sind, welche die Steuerung der Fluiddruckbeaufschlagung der Einspritzregler (56, 58) ermöglichen.

6. Harzeinspritzkreislauf (12) nach dem vorstehenden Anspruch, **dadurch gekennzeichnet, dass** der erste Einspritzregler (56) mit dem ersten Teil des Kreislaufs (26) zwischen dem zweiten Ventil (36) am Ausgang der Vorheizvorrichtung (31) und der Form (14) verbunden ist, und dass der zweite Einspritzregler (58) mit dem zweiten Teil des Kreislaufs (28) zwischen der Form (14) und der evakuierten Harzfalle (30) verbunden ist.

7. Verfahren zur Steuerung eines Harzeinspritzkreislaufs (12) nach Anspruch 6, **dadurch gekennzeichnet, dass** es nacheinander mindestens aufweist:
- einen Schritt (12), bei dem das Schließen des Harzöffnungs-/-schließventils (66) der Entleerung (64) überprüft wird und die Harzöffnungs-/-schließventile (34, 36, 38) der Vorheizvorrichtung (31) und der evakuierten Harzfalle (30) geöffnet werden, bis das Harz in der evakuierten Harzfalle (30) erscheint,
- einen Schritt (13), bei dem das Harzöffnungs-/-schließventil (38) der evakuierten Harzfalle (30) geschlossen wird,
- einen Schritt (14), bei dem die Druckquelle (24) mit den Einspritzreglern (56, 58) verbunden wird, wobei die Heizmittel der Regler (56, 58) aktiviert werden.
- einen Schritt (15), bei dem das Harzöffnungs-/Schließventil (36) am Ausgang (36) der Vorheizvorrichtung (31) geschlossen wird und die Fluidöffnungs-/Schließventile (60, 62), welche die Einspritzregler (56, 58) versorgen, geöffnet werden, bei dem dann das Fluidöffnungs-/Schließventil (54) der Druckfluidquelle (52) geöffnet wird,
- einen Schritt (16), bei dem die Vorheizvorrichtung (31) und der Harzeinspritzzylinder (24) getrennt werden und bei dem sie vor der Polymerisation des Harzes gereinigt werden,
- einen Schritt (17), bei dem der Fluiddruck in den Druckreglern (56, 58) für eine bestimmte Zeitdauer aufrechterhalten wird, insbesondere während einer Polymerisationsdauer des Harzes in der Spritzgussform (14).

8. Verfahren zur Herstellung eines Verbundteils, insbesondere eines Turbomaschinenverbundteils, ausgehend von einer harzimprägnierten Vorform (16) in einer Form (14), die durch einen Harzeinspritzkreislauf (12) nach Anspruch 6 versorgt wird, **dadurch gekennzeichnet, dass** es aufweist:
- einen ersten Schritt (R1) zur Einführung der Vorform (16) in eine Spritzgussform (14) und zur Schließung der Spritzgussform (14),
- einen zweiten Schritt (R2) zur Durchführung des Verfahrens zur Steuerung des Einspritzkreislaufs (12) nach Anspruch 7,
- einen dritten (R3) Schritt zur Entnahme des Teils aus der Form (14).

## Claims

1. A resin injection circuit (12) for injecting resin into a mould (14) for manufacturing a composite part, in particular a composite turbomachine part, said mould (14) being suitable for receiving a preform (16) to be impregnated with resin, said circuit (12) comprising at least one resin injection regulator (56, 58), comprising at least one enclosure (70) which is connected to said circuit (12) and inside which a movable wall means (72) is movable in a sealed manner, said movable wall means (72) delimiting a first cavity (74) in said enclosure, forming a resin accumulation reservoir, which is connected to at least a part (26) of said circuit (12) feeding said mould (14), and a second cavity (76) configured to be connected to a source of pressurised fluid (52), said movable wall means (72) being configured to be acted upon by the pressurised fluid feeding the second cavity (76) in order to exert pressure on the resin contained in the first cavity (74), isolating said resin from said fluid,
said enclosure (70) being formed of a tubular liner and the movable wall means (72) comprising a piston slidably movable in said tubular liner, said piston delimiting in said tubular liner a first chamber forming the first cavity (74) and a second pressurizing chamber forming the second cavity (76) configured to be connected to the source of pressurized fluid (52),
the resin injection regulator comprising:
- a tubular axial main body (80),
- the liner, having the same axial length (H) as the main body (80), and received in said main body (80),
- the piston, of the same diameter as the tubular liner, and comprising a means of dynamic sealing with said tubular liner,
- a first cover (94), configured to close a first end (92) of said main body (80) and a first end (96) of the liner, and comprising a first resin passage duct (124) opening into said liner,
- a second cover (88), configured to close a second end (84) of said main body and a second end (82) of the liner, and comprising a second fluid passage duct (126) opening into said liner,
- first and second static sealing means (106, 110) interposed between said liner and the first and second covers (88, 94).

2. The resin injection circuit (12) according to the preceding claim, **characterised in that** the second cavity (76) is configured to receive nitrogen.

3. The resin injection circuit (12) according to one of claims 1 or 2, **characterised in that** it comprises means for heating at least the first chamber and means for controlling the temperature of at least the first chamber.

4. The resin injection circuit (12) according to claim 3, **characterized in that** it comprises at least one heating element (116) interposed between the liner and the body (80), at least one means (118) for measuring the temperature of the liner interposed between the liner and the body (80), and at least connection means (120, 122) for connecting said heating element (114) and said measuring means (118), which pass through at least one of the first or second covers (88, 94).

5. The resin injection circuit (12) according to one of the preceding claims, **characterised in that** it comprises at least:
- a resin injection cylinder (24),
- the injection mould (14) comprising at least one first part (18) comprising an recess suitable for receiving the preform (16) and at least one second part (22) suitable for closing the recess,
- a resin trap (30) evacuated by a vacuum pump (32),
- a first injection circuit part (26) connecting the injection cylinder (24) to the injection mould (14),
- a second injection circuit part (28) connecting the injection mould (14) to the resin trap (30),
- a resin preheating device (31) interposed in the first circuit part (26),
- a resin drain (64) interposed between the resin injection cylinder (24) and the resin preheating device (31) in the first circuit part (26),
- resin opening/closing valves (34, 36, 66) interposed in the first circuit part (26) on either side of the preheating device (31) and upstream of the drain (64) on the one hand, and in the second circuit part (28) on the other hand, enabling to control the opening or closing of said first and second circuit parts (26, 28),
- two injection regulators (56, 58) connected respectively to the first and second circuit parts (26, 28) by their first ducts (124),
- a source of pressurised fluid (52) connected to the second ducts (126) of the injection regulators (56, 58),
- fluid opening/closing valves (60, 62) arranged at the outlet of the source of pressurised fluid and at the inlet of the second ducts (126) of the injection regulators (56, 58), enabling to control the pressurisation of the injection regulators (56, 58) fluidically.

6. The resin injection circuit (12) according to the preceding claim, **characterised in that** the first injection regulator (56) is connected to the first circuit part (26) between the second outlet valve (36) of the preheating device (31) and the mould (14), and **in that** the second injection regulator (58) is connected to the second circuit part (28) between the mould (14) and the evacuated resin trap (30).

7. A method of controlling the resin injection circuit (12) according to claim 6, **characterised in that** it comprises successively at least:
- a step (I2) during which the closure of the resin opening/closing valve (66) of the drain (64) is checked and the resin opening/closing valves (34, 36, 38) of the preheating device (31) and of the evacuated resin trap (30) are opened until the resin appears in the evacuated resin trap (30),
- a step (I3) during which the resin opening/closing valve (38) of the evacuated resin trap (30) is closed,
- a step (I4) during which the pressure source (24) is connected to the injection regulators (56, 58), the heating means of said regulators (56, 58) being activated.
- a step (I5) during which the resin opening/closing valve (36) at the outlet (36) of the preheating device (31) is closed and the fluid opening/closing valves (60, 62) feeding the injection regulators 56, 58 are opened, then during which the fluid opening/closing valve (54) of the pressurised fluid source (52) is opened,
- a step (I6) during which the preheating device (31) and the resin injection cylinder (24) are disconnected and during which they are cleaned before polymerisation of the resin,
- a step (I7) during which the fluid pressure in the pressure regulators (56, 58) is maintained for a given period of time, in particular during a period of polymerisation of the resin in the injection mould (14).

8. A method of manufacturing a composite part, in particular a composite turbomachine part, from a preform (16) impregnated with resin in a mould (14) fed by a resin injection circuit (12) according to claim 6, **characterised in that** it comprises:
- a first step (R1) of introducing the preform (16) into an injection mould (14) and closing said injection mould (14),
- a second step (R2) of implementing the method of controlling the injection circuit (12) according to claim 7,
- a third step (R3) of extracting the part from the mould (14).
